(19) Europäisches Patentamt
European Patent Office
Office européen des brevets

(11) **EP 4 517 920 A1**

(12) **EUROPEAN PATENT APPLICATION**
published in accordance with Art. 153(4) EPC

(43) Date of publication:
05.03.2025 Bulletin 2025/10

(21) Application number: 23819008.6

(22) Date of filing: 01.06.2023

(51) International Patent Classification (IPC):
$H01M\ 10/42^{(2006.01)}$      $H01M\ 4/13^{(2010.01)}$
$H01M\ 10/0525^{(2010.01)}$

(52) Cooperative Patent Classification (CPC):
Y02E 60/10

(86) International application number:
PCT/CN2023/097816

(87) International publication number:
WO 2023/236843 (14.12.2023 Gazette 2023/50)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 06.06.2022 CN 202210633013

(71) Applicant: Shenzhen Innovazone Technology Co.,
Ltd.
Shenzhen, Guangdong 518000 (CN)

(72) Inventors:
• LIN, Lvhuan
  Shenzhen, Guangdong 518000 (CN)
• WAN, Yuanxin
  Shenzhen, Guangdong 518000 (CN)
• KONG, Lingyong
  Shenzhen, Guangdong 518000 (CN)

(74) Representative: Petraz, Gilberto Luigi et al
GLP S.r.l.
Viale Europa Unita, 171
33100 Udine (IT)

(54) **COMPOSITE POSITIVE-ELECTRODE LITHIUM-SUPPLEMENTING ADDITIVE, AND PREPARATION METHOD THEREFOR AND USE THEREOF**

(57) A composite cathode lithium-supplementing additive and preparation method and application thereof are provided. The composite cathode lithium-supplementing additive of the present application includes a core and a functional encapsulation layer covering the core, the core includes a cathode lithium-supplementing material, and the functional encapsulation layer contains an oxygen-consuming agent. The composite cathode lithium-supplementing additive of the present application can effectively remove active oxygen, inhibit the active oxygen from inducing gas production reaction, thereby inhibiting the gas production of the battery containing the composite cathode lithium-supplementing additive of the present application during the charging and discharging process, and effectively improving the safety of the battery. In addition, the preparation method of the composite cathode lithium-supplementing additive can ensure that the structure and electrochemical performance of the prepared composite cathode lithium-supplementing additive are stable, the efficiency is high, and production cost is saved.

FIG. 4

EP 4 517 920 A1

**Description**

The present application claims the priority of the Chinese patent application filed with the Chinese Patent Office on June 6, 2022, with application number 202210633013.7 and titled "COMPOSITE CATHODE LITHIUM-SUPPLEMENTING ADDITIVE AND PREPARATION METHOD AND APPLICATION THEREOF", the entire contents of which are incorporated by reference in the present application.

## TECHNICAL FIELD

The present application relates to the technical field of secondary batteries, more particularly to a composite cathode lithium-supplementing additive and preparation method and application thereof.

## BACKGROUND

Lithium-ion batteries are considered to be one of the most promising energy sources due to their advantages such as high operating voltage and energy density, relatively small self-discharge level, no memory effect, no heavy metal pollution such as lead and cadmium, and ultra-long cycle life. They are widely used in electric vehicles, power tools, mobile electronic consumer products, energy storage, and many other aspects.

Although lithium-ion batteries have many advantages, during the initial charging process of lithium-ion batteries, the anode surfaces are usually accompanied by the formation of a solid electrolyte interface (SEI) film. This process consumes a large amount of $Li^+$, which means that the $Li^+$ deintercalated from the cathode materials is partially irreversibly consumed, and the reversible specific capacity of the corresponding battery cell is reduced.

Anode materials, especially silicon-based anode materials, will further consume $Li^+$, causing lithium loss in cathode materials, reducing the initial coulombic efficiency and capacity of lithium-ion batteries. For example, in a lithium-ion battery system using a graphite anode, the initial charge will consume about 10% of the lithium source. When using an anode material having high specific capacity, such as an alloy (silicon, tin, etc.), an oxide (silicon oxide, tin oxide), and an amorphous carbon anode, the consumption of cathode lithium source will be further aggravated.

In recent years, due to the capability of making up for the irreversible capacity loss caused by the formation of SEI film during the initial cycle of charging of lithium-ion batteries, cathode lithium-supplementing additives have attracted much attention and become one of the key technologies to further improve the performance of lithium-ion batteries, thus having broad market applications and development prospects. However, in research and practical applications, it is found that the use of existing lithium-supplementing additives also lead to the problem of increased gas production in lithium-ion batteries during the formation stage, which will cause flatulence inside the closed battery system, causing battery volume expansion and safety issues.

At present, the research on cathode lithium-supplementing additives is still in its initial stage, and a stable and mature product has not yet been formed. There is still no clear and systematic research result on the gas production mechanism of lithium-supplementing additives. For traditional lithium-ion batteries, reactions such as SEI film decomposition, electrolyte decomposition, and reaction between anode active materials and binders are prone to cause gas generation, and these reactions are often not carried out independently, and it is likely that multiple reactions will occur at the same time. In order to solve the above-mentioned problem of gas production in lithium-ion batteries, the methods currently used comprise using anhydride compounds, cyclic esters such as $\gamma$-butyrolactone, and polynitrile compounds as additives to be added to the electrolyte to form cathode and anode protective films, so as to inhibit gas production, but these measures often have problems such as poor ionic conductivity of the protective film, increased impedance, and instability of the cathode and anode protective films. Therefore, how to effectively improve the gas production problem caused by the use of cathode lithium-supplementing additives without affecting other battery properties is a problem that needs to be solved urgently, and has a significant impact on the improvement of lithium-ion battery performance.

## TECHNICAL PROBLEMS

It is an object of the present application to overcome the above-mentioned shortcomings of the prior art, and to provide a composite cathode lithium-supplementing additive and a preparation method thereof, so as to solve the technical problem that the existing cathode lithium-supplementing additive cannot inhibit battery gas production.

It is another object of the present application to provide a cathode and a secondary battery containing the cathode to solve the technical problem that the existing secondary battery is easy to produce gas and leads to unsatisfactory safety.

## TECHNICAL SOLUTIONS

In order to achieve the above application purpose, a first aspect of the present application provides a composite cathode lithium-supplementing additive. The composite cathode lithium-supplementing additive of the present application comprises a core and a functional encapsulation layer covering the core, the core comprises a cathode lithium-supplementing material, and the functional encapsulation layer contains an oxygen-consuming agent.

Further, the functional encapsulation layer is a first oxygen-consuming coating layer formed by the oxygen-consuming agent, and the first oxygen-consuming coating layer covers the core.

Or further, the functional encapsulation layer comprises a dense functional encapsulation layer, the dense functional encapsulation layer covers the core, and the oxygen-consuming agent is doped in the dense functional encapsulation layer.

Or further, the functional encapsulation layer comprises a dense functional encapsulation layer, the dense functional encapsulation layer covers the core, the oxygen-consuming agent forms a second oxygen-consuming coating layer, and the second oxygen-consuming coating layer covers the dense functional encapsulation layer.

Still further, the dense functional encapsulation layer comprises an ionic conductivity encapsulation layer and/or an electronic conductivity encapsulation layer, and the ionic conductivity encapsulation layer or the electronic conductivity encapsulation layer covers the core.

Still further, a thickness of the dense functional encapsulation layer is 2 nm to 100 nm.

Still further, a thickness of any one of the first oxygen-consuming coating layer and the second oxygen-consuming coating layer is 2 nm to 100 nm.

Specifically, a material of the electronic conductivity encapsulation layer comprises at least one of a carbon material, a conductive oxide, and a conductive organic matter.

Specifically, a material of the ionic conductivity encapsulation layer may comprise at least one of a perovskite type, a NASICON type, and a garnet type.

Specifically, the functional encapsulation layer comprises the electronic conductivity encapsulation layer, the electronic conductivity encapsulation layer covers the core, and the oxygen-consuming agent forms the second oxygen-consuming coating layer and covers the electronic conductivity encapsulation layer. The electronic conductivity encapsulation layer is a carbon layer.

Further, a content of an active oxygen accounts for not higher than 5% of the composite cathode lithium-supplementing additive.

Further, a mass content of the oxygen-consuming agent in the composite cathode lithium-supplementing additive is 0.1 wt.% to 10 wt.%.

Further, the oxygen-consuming agent comprises at least one of a polyphenol oxygen-consuming agent, a hindered phenol oxygen-consuming agent, a hindered amine oxygen-consuming agent, an L-ascorbic acid, a melatonin, and zinc dialkyl dithiophosphate.

Specifically, the polyphenol oxygen-consuming agent comprises at least one of tert-butyl hydroquinone and tea polyphenol.

Specifically, the hindered phenol comprises at least one of 2,6-di-tert-butyl-p-cresol, antioxidant 1076, antioxidant 1010, and tris(3,5-di-tert-butyl-4-hydroxybenzyl) isocyanurate.

Specifically, the hindered amine comprises N,N'-diphenyl-p-phenylenediamine.

Further, the cathode lithium-supplementing material comprises an inverse fluorite structured lithium-supplementing material.

Further, the cathode lithium-supplementing material comprises a material with a molecular formula of $L_xM_yN_zO_q$, in which, L represents Li or a mixed alkali metal element composed of Li and not exceeding 30% of at least one of K and Na; M comprises at least one of Fe, Co, Mn, Al, Ni, and Si; N comprises at least one of Fe, Co, Mn, Al, Ni, Si, or other equivalent or heterovalent metal elements, and O represents an oxygen element; x is 2 to 6, y is 0.7 to 1.0, z is 0 to 0.3, and q is 2 to 5.

Still further, a molar ratio of L to a sum of M and N in the molecular formula $L_xM_yN_zO_q$ is (4 to 7):1.

Further, the core is at least one of a primary particle and a secondary particle;

Further, a particle size of the core is 0.2 $\mu$m to 20 $\mu$m.

A second aspect of the present application provides a preparation method of a composite cathode lithium-supplementing additive. The preparation method of a composite cathode lithium-supplementing additive comprises the following steps:

forming a functional encapsulation layer on a surface of a particle containing a cathode lithium-supplementing material, to enable the functional encapsulation layer to cover the particle containing the cathode lithium-supplementing material, in which, the functional encapsulation layer contains an oxygen-consuming agent.

Further, the method of forming the functional encapsulation layer on the surface of the particle containing the cathode lithium-supplementing material comprises the following steps:

subjecting the oxygen-consuming agent and the particle containing the cathode lithium-supplementing material with a first mixing treatment, to enable the oxygen-consuming agent to form a third oxygen-consuming coating layer on the surface of the particle containing the cathode lithium-supplementing material.

Further, the method of forming the functional encapsulation layer on the surface of the particle containing the cathode lithium-supplementing material comprises the following steps:

subjecting the oxygen-consuming agent and a material for forming a dense functional encapsulation layer with a second mixing treatment to form a mixture, and subjecting the mixture and the particle containing the cathode lithium-supplementing material with a third mixing treatment, to enable the mixture to form the functional encapsulation layer on the surface of the particle containing the cathode lithium-supplementing material.

Further, the method of forming the functional encapsulation layer on the surface of the particle containing the cathode lithium-supplementing material comprises the following steps:

forming a dense functional encapsulation layer on the surface of the particle containing the cathode lithium-supplementing material by the material for forming a dense functional encapsulation layer, and subjecting a resulting product and the oxygen-consuming agent with a fourth mixing treatment to form a fourth oxygen-consuming coating layer on a surface of the dense functional encapsulation layer.

A third aspect of the present application provides a cathode lithium-supplementing additive. The cathode lithium-supplementing additive comprises the composite cathode lithium-supplementing additive of the present application or the composite cathode lithium-supplementing additive prepared by the preparation method of the present application, and further comprises other lithium-supplementing additives and/or auxiliary agents.

A fourth aspect of the present application provides a cathode. The cathode of the present application comprises: a current collector, and a cathode active layer bonded to a surface of the current collector. The cathode active layer comprises: a cathode active material, a lithium-supplementing additive, a binder, and a conductive agent. The lithium-supplementing additive is a composite cathode lithium-supplementing additive of the present application, the composite cathode lithium-supplementing additive prepared by the preparation method of the present application, or the cathode lithium-supplementing additive of the present application.

Further, the composite cathode lithium-supplementing additive accounts for 0.5 wt.% to 10 wt.% of the cathode active material.

A fifth aspect of the present application provides a secondary battery. The secondary battery of the present application comprises a cathode. The cathode is the cathode of the present application.

Compared with the prior art, technical effects of the present application are summarized as follows:

In the composite cathode lithium-supplementing additive of the present application, the functional encapsulation layer containing the oxygen-consuming agent covers the core, so that the functional encapsulation layer can effectively remove active oxygen in the core and during the charging and discharging process, inhibit the active oxygen from inducing gas production reaction, thereby inhibiting the gas production of the battery containing the composite cathode lithium-supplementing additive of the present application during the charging and discharging process, and effectively improving the safety of the battery. In addition, the functional encapsulation layer covers the lithium-rich core, so that the core is isolated from the ambient environment, avoiding contact between the ambient environment such as moisture and carbon dioxide and the core, ensuring the stability of the core, thereby making the composite cathode lithium-supplementing additive have excellent lithium-supplementing effect and processability, and good storage performance. Secondly, since the core of the composite cathode lithium-supplementing additive of the present application contains the cathode lithium-supplementing material, the composite cathode lithium-supplementing additive of the present application can provide abundant lithium, and can be used as a "sacrificial agent" during the initial cycle of charging, and release all lithium ions as much as possible at one time, thereby improving the initial coulombic efficiency and overall electrochemical performance of the battery.

The preparation method of the composite cathode lithium-supplementing additive of the present application can effectively prepare a composite cathode lithium-supplementing additive in a core-shell structure, and the shell layer is rich in oxygen-consuming agents, thereby ensuring that the prepared composite cathode lithium-supplementing additive has the functions of removing active oxygen and inhibiting the battery from gas production, and has excellent lithium-supplementing effect and processing performance. In addition, the preparation method of the composite cathode lithium-supplementing additive can ensure that the structure and electrochemical performance of the prepared composite cathode lithium-supplementing additive are stable, the efficiency is high, and production cost is saved.

The cathode lithium-supplementing additive of the present application can remove active oxygen and inhibit the gas production reaction caused by active oxygen, inhibit the gas production of the battery during the charging and discharging process, thereby effectively improving the initial columbic efficiency and safety of the battery.

Since the cathode of the present application contains the composite cathode lithium-supplementing additive of the present application, the cathode active layer of the cathode of the present application has the function of inhibiting gas production, thereby improving the safety performance of the battery. Moreover, the cathode of the present application is rich in lithium, and the cathode of the present application has high initial coulombic efficiency as well as other excellent electrochemical performances.

Since the secondary battery of the present application contains the electrode plate of the present application, the lithium-ion battery of the present application has excellent initial coulombic efficiency, battery capacity and cycle performance, low gas production, high safety, long service life and stable electrochemical performance.

## BRIEF DESCRIPTION OF THE DRAWINGS

In order to more clearly illustrate specific implementations of the present application or the technical solutions in the prior art, the drawings that need to be used in the description of the embodiments or the prior art will be briefly described hereinbelow. Obviously, the accompanying drawings in the following description are only some embodiments of the present application. For those skilled in the art, other drawings can be obtained based on these drawings without creative work.

FIG. 1 is a schematic diagram of a structure of a composite cathode lithium-supplementing additive of an embodiment of the present application;

FIG. 2 is a schematic diagram of one structure of the composite cathode lithium-supplementing additive shown in FIG. 1;

FIG. 3 is a schematic diagram of another structure of the composite cathode lithium-supplementing additive shown in FIG. 1; and

FIG. 4 is a schematic diagram of the third structure of the composite cathode lithium-supplementing additive shown in FIG. 1.

## DETAILED DESCRIPTION OF THE EMBODIMENTS

In order to make the technical problems, technical solutions, and beneficial effects to be solved in the present application clearer, the present application will be further described in detail below in conjunction with the embodiments. It should be understood that the specific embodiments described here are only used to explain the present application, but are not intended to limit the present application.

In the description of the present application, terminology "and/or" is only an association relationship describing associated objects, which means that there can be three kinds of relationships, for example, A and/or B, which can mean: A exists alone, A and B exist In addition, and B exists alone, in which, A and B can be singular or plural. Character "/" means that the objects associated with each other are an "or" relationship,

It should be noted that "at least one" means one or more, and "multiple" means two or more. "At least one of the following" or similar expressions refers to any combination of these items, including any combination of single or plural items. For example, "at least one of a, b, or c", or "at least one of a, b, and c" can mean: a, b, c, a-b (that is, a and b), a-c, b-c, or a-b-c, in which, a, b, and c can be singular or plural.

It should be understood that in various embodiments of the present application, the sequence numbers of the above processes do not mean the order of execution, and some or all steps may be executed in parallel or sequentially, and the execution order of each process shall be determined based on its functions and internal logic and should not constitute any limitation to the implementation process of the embodiments of the present application.

The terms used in the embodiments of the present application are only for the purpose of describing specific embodiments, and are not intended to limit the present application. The singular forms of "a", "said", and "the" used in the embodiments of the present application and the appended claims are also intended to include plural forms, unless the context clearly indicates other meanings.

The masses of the relevant components mentioned of the embodiments of the present application in the specification can not only refer to the specific contents of the component, but also represent the proportional relationship between the masses of the different components. The scaling up or down of the content of the fraction is within the scope disclosed the embodiments of the present application in the specification. Specifically, the mass described the embodiments of the present application in the specification may be $\mu$g, mg, g, kg and other well-known mass units in the chemical industry.

The terms "first" and "second" are only used for descriptive purposes to distinguish purposes such as substances from each other, and cannot be understood as indicating or implying relative importance or implicitly indicating the number of technical features indicated. For example, without departing from the scope of the embodiment of the present application, the first XX can also be referred to as the second XX, and similarly, the second XX can also be referred to as the first XX. Therefore, the features defined as "first" and "second" can explicitly or implicitly include one or more of the features.

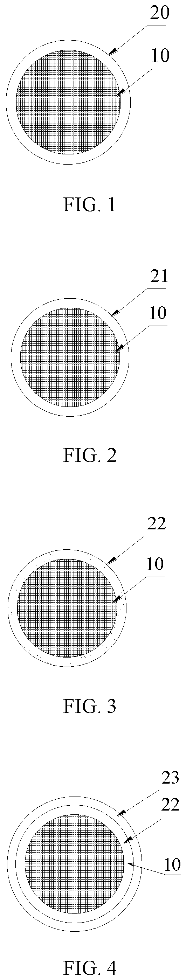

In a first aspect, embodiments of the present application provide a composite cathode lithium-supplementing additive. The composite cathode lithium-supplementing additive of the embodiments of the present application comprises: a core, and a functional encapsulation layer covering the core, that is, the composite cathode lithium-supplementing additive of the embodiments of the present application is in a core-shell structure. As in the embodiments, structures of the composite cathode lithium-supplementing additives of the embodiments of the present application are shown in FIGS. 1-4, comprising a core 10 and a functional encapsulation layer 20 covering the core 10.

The core 10 comprises a cathode lithium-supplementing material, that is, in the composite cathode lithium-supplementing additive of the embodiments of the present application, the core 10 is a lithium source for lithium-supplementing. Since the core 10 is rich in lithium, when the composite cathode lithium-supplementing additive of the embodiments of the present application is added to the electrode, the composite cathode lithium-supplementing additive can be used as a "sacrificial agent" during the initial cycle of charging, and all lithium ions contained in the composite cathode lithium-supplementing additive can be released as much as possible at one time to supply the irreversible lithium ions consumed by the anode to form the SEI film.

In addition, the cathode lithium-supplementing material contained in the core 10 can be a conventional lithium-supplementing material or a newly developed lithium-supplementing material. Based on the function of the composite cathode lithium-supplementing additive in the embodiments of the present application, in an embodiment, the cathode lithium-supplementing material is an inverse fluorite structured lithium-supplementing material. The inverse fluorite structured lithium-supplementing material thus gives the cathode lithium-supplementing material a unidirectional capacity characteristic, which can effectively deintercalate lithium ions during the initial charging process and will not allow lithium ions to be re-intercalated into the lithium-supplementing material during discharge, thereby ensuring the lithium-supplementing effect of the lithium-supplementing additive in the present application.

The cathode lithium-supplementing material contained in the core 10 can be a ternary lithium-supplementing material or a binary lithium-supplementing material. For example, in an embodiment, L represents Li or a mixed alkali metal element composed of Li and not exceeding 30% of at least one of K and Na; M comprises at least one of Fe, Co, Mn, Al, Ni, and Si; N comprises at least one of Fe, Co, Mn, Al, Ni, Si, or other equivalent or heterovalent metal elements, and O represents an oxygen element; x is 2 to 6, and optionally 4 to 6; y is 0.7 to 1.0; z is 0 to 0.3, can be optionally 0.01 to 0.3; and q is 2 to 5, can be optionally 4 to 5. In a further embodiment, a molar ratio of L to a sum of M and N in the molecular formula $L_xM_yN_zO_q$ is (4 to 7):1, and can specifically be 4:1, 5:1, 6:1, 7:1, and other typical but non-limiting new molar ratios. Based on the molecular formula $L_xM_yN_zO_q$, in a specific embodiment, the cathode lithium-supplementing material can be at least one of $Li_2NiO_2$, $Li_5FeO_4$, $Li_6MnO_4$, $Li_5Fe_{0.98}Al_{0.02}O_4$, $Li_2MnO_2$, $Li_2CoO_2$, and the like. These cathode lithium-supplementing materials are rich in lithium and can release lithium ions during the initial cycle of charging to effectively supplement lithium. When the cathode lithium-supplementing material adopts an inverse fluorite structure, it can also improve the unidirectional capacity characteristics of the cathode lithium-supplementing material, thereby ensuring the lithium-supplementing effect of the lithium-supplementing additive of the present application.

In an embodiment, the core 10 can be at least one of a primary particle and a secondary particle. Specifically, the cathode lithium-supplementing material contained in the core 10 forms at least one of the primary particle and the secondary particle. In an embodiment, a particle size of the core 10 can be 0.2 μm to 20 μm. For example, when the core 10 is a primary particle, the primary particle size, that is, the particle size distribution of the core 10, is 0.2 μm to 4 μm. When the core 10 is a secondary particle, the secondary particle size, that is, the particle size distribution of the core 10, is 0.4 μm to 20 μm. The secondary particle refers to an agglomerated particle formed by the aggregation of more than one primary particle. By controlling the morphology and particle size of the core 10, on the basis of being able to provide abundant lithium ions, the processability of the composite cathode lithium-supplementing additive in the preparation of the lithium battery slurry is further improved. A smaller primary particle size can also deintercalate more lithium ions.

In addition, although the cathode lithium-supplementing material contained in the core 10 in the above embodiments is rich in lithium, it is found in the study that the cathode lithium-supplementing material generally contains components such as active oxygen and residual alkali. The presence of active oxygen will cause the problem of increased gas production in the formation stage of the battery during use. The residual alkali contained therein causes the cathode lithium-supplementing material to be unstable when coming into contact with water and carbon dioxide, and to be easily react with water and carbon dioxide, thereby reducing the lithium-supplementing effect of the cathode lithium-supplementing additive, further resulting in reduced processing performance and poor storage performance, thereby increasing its processing and application costs, such as causing the cathode lithium-supplementing material contained in the core 10 to have a sharp increase in slurry viscosity during processing and to quickly gel to lose fluidity, thereby making it impossible to carry out subsequent processing. Therefore, on the basis of the core 10 in the above embodiments, the functional encapsulation layer 20 contained in the composite cathode lithium-supplementing additive in the above embodiments covers the core 10 to form a complete coating layer, as shown in FIG. 1, and the functional encapsulation layer 20 contains an oxygen-consuming agent. In this way, on the one hand, the functional encapsulation layer 20 can effectively remove the active oxygen in the core and inhibit the active oxygen from inducing the gas production reaction, thereby being able to inhibit the gas production of the battery containing the composite cathode lithium-supplementing additive during the charging and discharging process, and effectively improve the safety of the battery. On the other hand, the functional encapsulation layer 20 acts as an insulating layer, which isolates the core 10 from the ambient environment, prevents the core from contacting with the ambient environment such as moisture and carbon dioxide, and ensures the stability of the cathode lithium-supplementing material contained in the core 10, thereby making the composite cathode lithium-supplementing additive have excellent lithium-supplementing effect, processability and storage performances.

The oxygen-consuming agent exists in the functional encapsulation layer 20 in at least the following ways:
In an embodiment, as shown in FIG. 2, the functional encapsulation layer 20 is a first oxygen-consuming coating layer 21 formed by the oxygen-consuming agent, and the first oxygen-consuming coating layer 21 covers the core 10. That is, the oxygen-consuming agent is the material of the functional encapsulation layer 20, and forms a coating layer to cover the core 10. The first oxygen-consuming coating layer 21 directly covers the core 10, fully plays the above-mentioned functions of the oxygen-consuming agent, and inhibits the gas-generating reaction caused by active oxygen and other gas-generating components. In an embodiment, a thickness of the first oxygen-consuming coating layer 21 can be controlled at 2 nm to 100 nm.

In another embodiment, as shown in FIG. 3, the functional encapsulation layer 20 comprises a dense functional encapsulation layer 22, the dense functional encapsulation layer 22 covers the core 10, and the oxygen-consuming agent is doped in the dense functional encapsulation layer 22. By doping the oxygen-consuming agent in the dense functional encapsulation layer 22, the above-mentioned functions of the oxygen-consuming agent can be fully played, and the gas-generating reaction caused by active oxygen and other gas-generating components is inhibited. In addition, the dense functional encapsulation layer 22 can play a protective role in isolating the ambient environment, improve the lithium-supplementing effect of the cathode lithium-supplementing material in the core 10, and improve the processing performance and storage performance of the composite cathode lithium-supplementing additive in the embodiments of the present application. In an embodiment, a thickness of the dense functional encapsulation layer 22 can be controlled at 2 nm to 100 nm.

In another embodiment, as shown in FIG. 4, the functional encapsulation layer 20 comprises a dense functional encapsulation layer 22, the dense functional encapsulation layer 22 covers the core 10, the oxygen-consuming agent forms a second oxygen-consuming coating layer 23, and the second oxygen-consuming coating layer 23 covers the dense functional encapsulation layer 22. The oxygen-consuming agent forms an oxygen-consuming coating layer, full plays the above-mentioned functions of the oxygen-consuming agent, and inhibits the gas-generating reaction caused by active oxygen and other gas-generating components. In addition, the dense functional encapsulation layer 22 can play a protective role in isolating the ambient environment, improve the lithium-supplementing effect of the cathode lithium-supplementing material in the core 10, and improve the processing performance and storage performance of the composite cathode lithium-supplementing additive in the embodiments of the present application. In an embodiment, a thickness of the dense functional encapsulation layer 22 can be controlled to be 2 nm to 100 nm, and a thickness of the second oxygen-consuming coating layer 23 can be controlled to be 2 nm to 100 nm.

In the functional encapsulation layer 20 of the above embodiments, a mass content of the oxygen-consuming agent can be controlled to be 0.1 wt.% to 10 wt.% of the composite cathode lithium-supplementing additive, and can be 0.1 wt.%, 0.5 wt.%, 1 wt.%, 2 wt.%, 3 wt.%, 4 wt.%, 5 wt.%, 6 wt.%, 7 wt.%, 8 wt.%, 9 wt.%, 10 wt.%, and other typical but non-limiting contents. In another embodiment, the oxygen-consuming agent is at least one of a polyphenol oxygen-consuming agent, a hindered phenol oxygen-consuming agent, a hindered amine oxygen-consuming agent, and other types of oxygen-consuming agents. In a specific embodiment, the polyphenol oxygen-consuming agent may comprise at least one of tert-butyl hydroquinone, tea polyphenol, etc.; the hindered phenol may comprise at least one of 2,6-di-tert-butyl-p-cresol, antioxidant 1076, antioxidant 1010, tris(3,5-di-tert-butyl-4-hydroxybenzyl) isocyanurate, etc.; the hindered amine may comprise but not limited to N, N'-diphenyl-p-phenylenediamine; and the other types of oxygen-consuming agents may comprise at least one of L-ascorbic acid, melatonin, and zinc dialkyl dithiophosphate. By controlling and optimizing the type of oxygen-consuming agent and the content thereof in the functional encapsulation layer 20, that is, the composite cathode lithium-supplementing additive, the oxygen-consuming agent can be improved to remove the active oxygen in the core 10, and further inhibit the active oxygen from inducing the gas production reaction, thereby further effectively improving the safety of the battery.

In the embodiments of the functional encapsulation layer 20 contained in the above composite cathode lithium-supplementing additive, when the functional encapsulation layer 20 contains a dense functional encapsulation layer 22, in an embodiment, the dense functional encapsulation layer 22 comprises an ionic conductivity encapsulation layer or an electronic conductivity encapsulation layer, or a composite coating layer of an ionic conductivity encapsulation layer and an electronic conductivity encapsulation layer. The ionic conductivity encapsulation layer or the electronic conductivity encapsulation layer covers the core 10. When the dense functional encapsulation layer 22 comprises the composite coating layer of the ionic conductivity encapsulation layer and the electronic conductivity encapsulation layer, the ionic conductivity encapsulation layer or the electronic conductivity encapsulation layer covers the core 10, and the remaining functional layer is coated on the outer surface. By adding the ionic conductivity encapsulation layer, the ionic conductivity and compactness of the dense functional encapsulation layer 22 can be effectively enhanced, thereby enhancing the ionic conductivity of the composite cathode lithium-supplementing additive, which is beneficial to the outward transport of lithium ions of the core, thereby enhancing the lithium-supplementing effect. In addition, after the core 10 is released as a "sacrifice" and the lithium ions are completely released, the ionic conductivity encapsulation layer can also be reused, playing an auxiliary role in enhancing ion transmission inside the electrode. By adding the electronic conductivity encapsulation layer, the electronic conductivity and compactness of the dense functional encapsulation layer 22 can be enhanced, thereby enhancing the electronic conductivity of the composite cathode lithium-supplementing additive, which is beneficial to reducing the impedance inside the electrode. In addition, during and after the release of the core 10 as a "sacrifice", the electronic conductivity encapsulation layer can also be reused to play an auxiliary role as a conductive agent inside the electrode.

When the dense functional encapsulation layer 22 contains a composite layer of the ionic conductivity encapsulation layer and the electronic conductivity encapsulation layer, the electronic conductivity encapsulation layer and the ionic conductivity encapsulation layer can also play a synergistic role in compactness, improving the compactness of the dense functional encapsulation layer 22 while improving its ion and electronic conductivity performance. When the dense functional encapsulation layer 22 contains the composite layer of the ionic conductivity encapsulation layer and the electronic conductivity encapsulation layer, the respective ionic conductivity encapsulation layer and electronic conductivity encapsulation layer may not be densely coated, but the composite layer formed by a combination of the two is densely coated.

In an embodiment, a material of the ionic conductivity encapsulation layer may comprise at least one of a perovskite type, a NASICON type, and a garnet type. In a specific embodiment, the perovskite type comprises $Li_{3x}La_{2/3-x}TiO_3$ (LLTO), such as at least one of $Li_{0.5}La_{0.5}TiO_3$, $Li_{0.33}La_{0.57}TiO_3$, $Li_{0.29}La_{0.57}TiO_3$, $Li_{0.33}Ba_{0.25}La_{0.39}TiO_3$, $(Li_{0.33}La_{0.56})_{1.005}Ti_{0.99}Al_{0.01}O_3$, $Li_{0.5}La_{0.5}Ti_{0.95}Zr0.05O_3$, etc. The NASICON type is such as but not limited to $Li_{1.4}Al_{0.4}Ti_{1.6}(PO_4)_3$(LATP), and the garnet type comprises at least one of $Li_7La_3Zr_2O_{12}$ (LLZO), $Li_{6.4}La_3Zr_{1.4}Ta_{0.6}O_{12}$, and $Li_{6.5}La_3Zr_{1.5}Ta_{0.5}O_{12}$. By selecting the material of the ionic conductivity encapsulation layer, the ionic conductivity of the ionic conductivity encapsulation layer can be further improved. It can be understood that the thickness of the above ionic conductivity encapsulation layer, or further the electronic conductivity encapsulation layer, can be adjusted to optimize the compactness of the compact functional encapsulation layer 22 and adjust the path of ion transmission.

In an embodiment, a material of the electronic conductivity encapsulation layer may comprise at least one of a carbon material, a conductive oxide, and a conductive organic matter. In a specific embodiment, when the material of the electronic conductivity encapsulation layer is a carbon material, the carbon material comprises at least one of an amorphous carbon, a carbon nanotube, a graphite, a carbon black, a graphene, etc. In other specific embodiments, when the material of the electronic conductivity encapsulation layer is a conductive oxide, the conductive oxide may comprise at least one of $In_2O_3$, ZnO, and $SnO_2$. The conductive organic matter may be a conductive polymer, etc. By adjusting the material or further condition content of the electronic conductivity encapsulation layer, the electronic conductivity thereof can be further improved.

Based on the structure of the functional encapsulation layer 20 and the types of materials contained in each layer, in a specific embodiment, the functional encapsulation layer 20 comprises the electronic conductivity encapsulation layer, the electronic conductivity encapsulation layer covers the core, and the oxygen-consuming agent forms the second oxygen-consuming coating layer 23 and covers the electronic conductivity encapsulation layer. The electronic conductivity encapsulation layer is a carbon layer.

In addition, based on the structures and components of the composite cathode lithium-supplementing additive in the above embodiments, the composite cathode lithium-supplementing additive in embodiments of the present application can not only provide abundant lithium, but also effectively remove the active oxygen in the core and the charging and discharging process, inhibit the active oxygen from inducing the gas production reaction, thereby effectively inhibiting the gas production of the battery during the charging and discharging process, and effectively improving the safety of the battery. In addition, the composite cathode lithium-supplementing additive in embodiments of the present application also has excellent lithium-supplementing effect and processability, and good storage performance.

According to the test, the active oxygen content of the composite cathode lithium-supplementing additive in the embodiments of the present application is low, as in an embodiment of the present application, a content of an active oxygen accounts for not higher than 5% of the composite cathode lithium-supplementing additive, which can even be controlled to 0. The active oxygen content can be measured by potassium permanganate titration method, and the test principle is as follows:

active oxygen $[O_2^-]$ reacts with potassium permanganate (purple-black) under an acidic condition to generate $O^2$ and colorless $Mn^{2+}$. The reaction equation is shown in formula (1). Therefore, the active oxygen content in the test object can be titrated with potassium permanganate standard solution, and the titration end point is the appearance of a permanent light pink color. The chemical reaction formula is shown in formula (1):

$$5[O_2^-] + MnO_4^- + 8H^+ \rightarrow 5O_2\uparrow + Mn^{2+} + 4H_2O \qquad \text{Formula (1)}$$

In a second aspect, embodiments of the present application further provide a preparation method of the above composite cathode lithium-supplementing additive. The preparation method of the composite cathode lithium-supplementing additive of the embodiments of the present application comprises the following steps:
forming a functional encapsulation layer on a surface of a particle containing a cathode lithium-supplementing material, to enable the functional encapsulation layer to cover the particle containing the cathode lithium-supplementing material, in which, the functional encapsulation layer contains an oxygen-consuming agent.

The particle containing the cathode lithium-supplementing material in step S01 is a particle of the core 10 forming the composite cathode lithium-supplementing additive mentioned above. Therefore, the cathode lithium-supplementing material contained therein is the cathode lithium-supplementing material contained in the core 10 of the composite cathode lithium-supplementing additive mentioned above. The functional encapsulation layer in step S01 is the functional encapsulation layer 20 forming the composite cathode lithium-supplementing additive mentioned above, so the functional encapsulation layer contains an oxygen-consuming agent, which is also the oxygen-consuming agent contained in the composite cathode lithium-supplementing additive mentioned above. Therefore, the materials, structures, and thicknesses of the particle containing the cathode lithium-supplementing material and the functional encapsulation layer in step S01 are the materials, structures and thicknesses of the core 10 and the functional encapsulation layer 20 of the composite cathode lithium-supplementing additive mentioned above. In order to save space, the cathode lithium-supplementing material and the functional encapsulation layer in step S01 will not be repeatedly described hereinbelow.

In addition, the cathode lithium -supplementing material can be prepared according to the preparation method of each cathode lithium-supplementing material.

In an embodiment, the method of forming the functional encapsulation layer on the surface of the particle containing the cathode lithium-supplementing material in step S01 can be flexibly controlled according to the structure of the functional encapsulation layer 20 of the composite cathode lithium-supplementing additive described above. For example, when the functional encapsulation layer 20 is the first oxygen-consuming coating layer 21 as shown in FIG. 2 , the method of forming the functional encapsulation layer on the surface of the particle containing the cathode lithium-supplementing material comprises the following steps:

subjecting the oxygen-consuming agent and the particle containing the cathode lithium-supplementing material with a first mixing treatment, to enable the oxygen-consuming agent to form a third oxygen-consuming coating layer on the surface of the particle containing the cathode lithium-supplementing material;

The mixing treatment of the oxygen-consuming agent with the particle containing the cathode lithium-supplementing material can be firstly preparing the oxygen-consuming agent into a solution and then mixing the solution with the particle containing the cathode lithium-supplementing material to form a mixed solution; or alternatively, directly mixing the oxygen-consuming agent with the particle containing the cathode lithium-supplementing material and then preparing the mixture into a slurry; or other methods.

The first mixing treatment is any mixing method that can make the oxygen-consuming agent form a uniform coating layer on the surface of the particle containing the cathode lithium-supplementing material, such as but not limited to stirring, ball milling, etc.

For example, when the functional encapsulation layer 20 is as shown in FIG. 3, the oxygen-consuming agent is doped in the dense functional encapsulation layer 22, and the method of forming the functional encapsulation layer on the surface of the particle containing the cathode lithium-supplementing material comprises the following steps:

subjecting the oxygen-consuming agent and a material for forming a dense functional encapsulation layer with a second mixing treatment to form a mixture, and subjecting the mixture and the particle containing the cathode lithium-supplementing material with a third mixing treatment, to enable the mixture to form the functional encapsulation layer on the surface of the particle containing the cathode lithium-supplementing material;

The second mixing treatment is any mixing method that can make the oxygen-consuming agent and the material forming the dense functional encapsulation layer form a mixture and make the oxygen-consuming agent uniformly dispersed, such as but not limited to stirring, ball milling, etc. Since the oxygen-consuming agent forms a mixture with the material forming the dense functional encapsulation layer, the relevant stability of the oxygen-consuming agent and the material forming the dense functional encapsulation layer should be compatible, such as thermal stability should be compatible, that is, in the process of the mixture forming the functional encapsulation layer on the surface of the particle containing the cathode lithium -supplementing material, at least the stability of the oxygen-consuming agent should be ensured, thereby ensuring that the oxygen-consuming agent can inhibit the activity of active oxygen. As in an embodiment, the oxygen-consuming agent is the oxygen-consuming agent described above, and the material forming the dense functional encapsulation layer comprises a conductive organic matter, a metal oxide, a non-metal oxide, etc.

The purpose and method of the third mixing treatment are the same as those of the first mixing treatment, and the third mixing treatment can be any mixing method as long as such mixing method can make the mixture form a uniform coating layer on the surface of the particle containing the cathode lithium-supplementing material.

The method of forming the structure as shown in FIG. 3 by the oxygen-consuming agent and the particle containing the cathode lithium-supplementing material can be as follows: firstly mixing the oxygen-consuming agent with the encapsulation layer material, heating a resulting mixture to form a composite, and then mixing the composite with the lithium-supplementing material particle.

For example, when the functional encapsulation layer 20 is a structure where the oxygen-consuming agent forms the second oxygen-consuming coating layer 23 and the second oxygen-consuming coating layer 23 covers the dense functional encapsulation layer 22 as shown in FIG. 4, the method of forming the functional encapsulation layer on the surface of the particle containing the cathode lithium-supplementing material comprises the following steps:

forming a dense functional encapsulation layer on the surface of the particle containing the cathode lithium-supplementing material by the material for forming a dense functional encapsulation layer, and subjecting a resulting product and the oxygen-consuming agent with a fourth mixing treatment to form a fourth oxygen-consuming coating layer on a surface of the dense functional encapsulation layer.

The method of forming the dense functional encapsulation layer on the surface of the particle containing the cathode lithium-supplementing material can be determined according to the material properties of the dense functional encapsulation layer. For example, a slurry first is prepared and then mixed with the particle containing the cathode lithium-supplementing material, or further performed with sintering treatment, or performed with a deposition method to form a coating layer. For example, when the material forming the dense functional encapsulation layer is a conductive organic matter, the conductive organic matter is directly prepared into a slurry and mixed with the particle containing the cathode lithium-supplementing material to form a conductive organic matter coating layer on the surface of the particle containing the cathode lithium-supplementing material. Or alternatively, the conductive organic matter coating layer is further carbonized to form a carbon coating layer in situ on the surface of the particle containing the cathode lithium-supplementing material. For example, when the material forming the dense functional encapsulation layer is a conductive oxide, the conductive oxide precursor slurry is directly mixed with the particle containing the cathode lithium-supplementing material to form a precursor coating layer on the surface of the particle containing the cathode lithium-supplementing material, and then sintering treatment is performed to form an oxide coating layer. The method of forming the second oxygen-consuming coating layer on the surface of the dense functional encapsulation layer can refer to the above-mentioned method of forming the first oxygen-consuming coating layer, such that the second oxygen-consuming coating layer is formed to cover the dense functional encapsulation layer.

Therefore, the preparation method of the composite cathode lithium-supplementing additive can effectively prepare the composite cathode lithium-supplementing additive of the above embodiments of the present application in the core-shell structure, thereby ensuring that the prepared composite cathode lithium-supplementing additive has the functions of removing active oxygen and inhibiting the battery from gas production, and has excellent lithium-supplementing effect and good processing performance. In addition, the preparation method of the composite cathode lithium-supplementing additive can ensure that the structure and electrochemical performance of the prepared composite cathode lithium-supplementing additive are stable, the efficiency is high, and production cost is saved.

In a third aspect, embodiments of the present application further provide a cathode lithium-supplementing additive. The cathode lithium-supplementing additive of the embodiments of the present application contains the composite cathode lithium-supplementing additive of the above embodiments of the present application. It can be understood that the cathode lithium-supplementing additive of the embodiments of the present application can also contain other lithium-supplementing additives and/or auxiliary agents. Since the cathode lithium-supplementing additive of the embodiments of the present application contains the composite cathode lithium-supplementing additive of the above embodiments of the present application, the cathode lithium-supplementing additive can remove active oxygen and inhibit the gas production reaction caused by active oxygen, and inhibit the gas production of the battery containing the cathode lithium-supplementing additive of the embodiments of the present application during the charging and discharging process, thereby effectively improving the initial columbic efficiency and safety of the battery.

In a fourth aspect, embodiments of the present application further provide a cathode. The cathode of the embodiments of the present application comprises a cathode current collector and a cathode active layer bonded to a surface of the cathode current collector.

The cathode current collector of the cathode may be but not limited to any one of a copper foil and an aluminum foil.

The cathode active layer of the cathode comprises components such as a cathode active material, a lithium-supplementing additive, a binder, and a conductive agent.

The lithium-supplementing additive in the cathode active layer is the composite cathode lithium-supplementing additive of the above embodiments of the present application or the cathode lithium-supplementing additive the above embodiments of the present application. Since the cathode of the embodiments of the present application contains the composite cathode lithium-supplementing additive of the above embodiments of the present application, the cathode of the embodiments of the present application can inhibit gas production and have the lithium-supplementing effect, effectively improve the safety performance of the battery, have high initial coulombic efficiency, and other excellent electrochemical properties. Ideally, the composite cathode lithium-supplementing additive of the above embodiments of the present application and the cathode of the above embodiments of the present application are stored in a dry, oxygen-free favorable environment, such as a vacuum environment to maximize the electrochemical performance of the composite cathode lithium-supplementing additive of the above embodiments of the present application and the cathode of the above embodiments of the present application. In an embodiment, a content of the composite cathode lithium-supplementing additive is controlled to account for 0.5 wt.% to 10 wt.% of the cathode active material.

The cathode active material in the cathode active layer can be a cathode material in the field of lithium ion batteries. For example, the cathode active material can comprise one or more of lithium cobalt oxide, lithium manganate, lithium iron phosphate, lithium manganese iron phosphate, lithium vanadium phosphate, lithium vanadium oxyphosphate, lithium vanadium phosphate fluorinated, lithium titanate, lithium nickel manganate, lithium nickel cobalt manganate, and lithium nickel cobalt aluminum oxide.

In an embodiment, a content of the binder in the cathode active layer can be 2 wt.% to 4 wt.%. In a specific embodiment, the content of the binder can be 2 wt.%, 3 wt.%, 4 wt.%, and other typical but non-limiting contents. In a specific embodiment, the binder comprises one or more of a polyvinylidene fluoride, a soluble polytetrafluoroethylene, a styrene-butadiene rubber, a hydroxypropyl methylcellulose, a methylcellulose, a carboxymethyl cellulose, a polyvinyl alcohol, an acrylonitrile copolymer, a sodium alginate, a chitosan, and a chitosan derivative.

In an embodiment, a content of the conductive agent in the cathode active layer can be 3 wt.% to 5 wt.%. In a specific embodiment, the content of the binder can be 3 wt.%, 4 wt.%, 5 wt.%, and other typical but non-limiting contents. In a specific embodiment, the conductive agent comprises one or more of a graphite, a carbon black, an acetylene black, a graphene, a carbon fiber, a C60, and a carbon nanotube.

In an embodiment, the preparation process of the cathode can be as follows: mixing the cathode active material, the lithium-supplementing additive, the conductive agent, and the binder to obtain an electrode slurry, coating the electrode slurry on the current collector, performing drying, rolling, die cutting and other steps to obtain the cathode plate.

In a fifth aspect, embodiments of the present application further provide a secondary battery. The secondary battery of the embodiments of the present application comprises necessary components such as a cathode plate, an anode plate, a separator, and an electrolyte, and other necessary or auxiliary components. The cathode plate is the cathode of the embodiments of the present application, that is, the cathode active layer contained in the cathode plate contains the composite cathode lithium-supplementing additive of the above embodiments of the present application. Since the secondary battery of the above embodiments of the present application contains the composite cathode lithium-supplementing additive of the above embodiments of the present application, based on the composite cathode lithium-supplementing additive of the above embodiments of the present application, the secondary battery of the present application has excellent initial coulombic efficiency, high energy density and cycle performance, high capacity retention rate, long service life, low gas production, high safety, and stable electrochemical performance.

In addition, the lithium battery of the embodiments of the present application can be a lithium ion battery or a lithium metal battery.

The following adopts multiple specific examples to illustrate the composite cathode lithium-supplementing additive and preparation method and application thereof of the embodiments of the present application.

**1. Examples of composite cathode lithium-supplementing additive and preparation method thereof:**

**Example A1**

The present example provides a composite cathode lithium-supplementing additive and a preparation method thereof. The composite cathode lithium-supplementing additive comprises a $Li_5FeO_4$ cathode lithium-supplementing material as a core and a functional encapsulation layer covering the core. A carbon layer in the functional encapsulation layer is an intermediate layer and a tert-butylhydroquinone oxygen-consuming agent is an outer layer.

Preparation method of the composite cathode lithium-supplementing additive of this example was performed by the following steps:

S1. Preparation of cathode lithium-supplementing material: a certain amount of lithium oxide and ferric oxide were collected according to a ratio of Li:Fe=5.1:1, and fully mixed, and a resulting mixture was sintered at a temperature of 800°C for 10 hrs in an argon atmosphere to obtain a $Li_5FeO_4$ material;

S2. Preparation of functional encapsulation layer: the $Li_5FeO_4$ lithium-supplementing material prepared in S1 was added with citric acid having a corresponding content accounting for 5 wt.% of the $Li_5FeO_4$ lithium-supplementing material, and balled milled to achieve full mixing, then sintered at a temperature of 550°C for 4 hrs in an argon atmosphere. A resulting product was added with 3 wt.% of a tert-butylhydroquinone oxygen-consuming agent, evenly mixed, and sintered at a temperature of 200°C for 3 hrs in an argon atmosphere to form a functional encapsulation layer on the surface of the lithium-supplementing material.

It was measured that the D50 of the composite cathode lithium-supplementing additive was 0.78 $\mu$m, the BET specific surface area was 0.35 $m^2/g$, the active oxygen content was 0.60%, and the thickness of the functional encapsulation layer was about 10 nm.

**Example A2**

The present example provides a composite cathode lithium-supplementing additive and a preparation method thereof. The composite cathode lithium-supplementing additive comprises a $Li_5FeO_4$ cathode lithium-supplementing

material as a core and a functional encapsulation layer coating the core. A carbon layer in the functional encapsulation layer is an intermediate layer and a tea polyphenol oxygen-consuming agent is an outer layer.

The preparation method of the composite cathode lithium-supplementing additive in the present example was the same as that in Example 1, except that the oxygen-consuming agent was tea polyphenol.

It was measured that the D50 of the composite cathode lithium-supplementing additive was 0.76 $\mu$m, the BET specific surface area was 0.35 m$^2$/g, the active oxygen content was 0.83%, and the thickness of the functional encapsulation layer was about 10 nm.

**Example A3**

The present example provides a composite cathode lithium-supplementing additive and a preparation method thereof. The composite cathode lithium-supplementing additive comprises a $Li_5FeO_4$ cathode lithium-supplementing material as a core and a functional encapsulation layer coating the core. A carbon layer in the functional encapsulation layer is an intermediate layer, and an L-ascorbic acid oxygen-consuming agent is an outer layer.

The preparation method of the composite cathode lithium-supplementing additive in the present example was the same as that in Example 1, except that the oxygen-consuming agent was L-ascorbic acid.

It was measured that the D50 of the composite cathode lithium-supplementing additive was 0.77 $\mu$m, the BET specific surface area was 0.36 m$^2$/g, the active oxygen content was 0.78%, and the thickness of the functional encapsulation layer was about 10 nm.

**Example A4**

The present example provides a composite cathode lithium-supplementing additive and a preparation method thereof. The composite cathode lithium-supplementing additive comprises a $Li_6MnO_4$ cathode lithium-supplementing material as a core and a functional encapsulation layer covering the core. A carbon layer in the functional encapsulation layer is an intermediate layer and a tert-butylhydroquinone oxygen-consuming agent is an outer layer.

Preparation method of the composite cathode lithium-supplementing additive of this example was performed by the following steps:

S1. Preparation of cathode lithium-supplementing material: a certain amount of lithium oxide and manganese oxide were collected according to a ratio of Li:Mn=6.2:1, and fully mixed, and a resulting mixture was sintered at a temperature of 750°C for 6 hrs in an argon atmosphere to obtain a $Li_6MnO_4$ material;

S2. Preparation of functional encapsulation layer: the $Li_6MnO_4$ lithium-supplementing material prepared in S1 was added with citric acid having a corresponding content accounting for 5 wt.% of the $Li_6MnO_4$ lithium-supplementing material, and balled milled to achieve full mixing, then sintered at a temperature of 550°C for 4 hrs in an argon atmosphere. A resulting product was added with 3 wt.% of a tert-butylhydroquinone oxygen-consuming agent, evenly mixed, and sintered at a temperature of 200°C for 3 hrs in an argon atmosphere to form a functional encapsulation layer on the surface of the lithium-supplementing material.

It was measured that the D50 of the composite cathode lithium-supplementing additive was 0.76 $\mu$m, the BET specific surface area was 0.37m$^2$/g, the active oxygen content was 1.02%, and the thickness of the functional encapsulation layer was about 10 nm.

**Example A5**

The present example provides a composite cathode lithium-supplementing additive and a preparation method thereof. The composite cathode lithium-supplementing additive comprises a $Li_2NiO_2$ cathode lithium-supplementing material as a core and a functional encapsulation layer covering the core. A carbon layer in the functional encapsulation layer is an intermediate layer and a tert-butylhydroquinone oxygen-consuming agent is an outer layer.

Preparation method of the composite cathode lithium-supplementing additive of this example was performed by the following steps:

S1. Preparation of cathode lithium-supplementing material: a certain amount of lithium oxide and nickel oxide were collected according to a ratio of Li:Ni=2.2:1, and fully mixed, and a resulting mixture was sintered at a temperature of 700°C for 8 hrs in an argon atmosphere to obtain a $Li_2NiO_2$ material;

S2. Preparation of functional encapsulation layer: the $Li_2NiO_2$ lithium-supplementing material prepared in S1 was added with citric acid having a corresponding content accounting for 5 wt.% of the $Li_2NiO_2$ lithium-supplementing material, and balled milled to achieve full mixing, then sintered at a temperature of 520°C for 4 hrs in an argon atmosphere. A resulting product was added with 3 wt.% of a tert-butylhydroquinone oxygen-consuming agent, evenly mixed, and sintered at a temperature of 200°C for 3 hrs in an argon atmosphere to form a functional encapsulation layer on the surface of the lithium-supplementing material.

It was measured that the D50 of the composite cathode lithium-supplementing additive was 0.71 $\mu$m, the BET specific surface area was 0.41m$^2$/g, the active oxygen content was 0.90%, and the thickness of the functional encapsulation layer was about 10 nm.

**Example A6**

The present example provides a composite cathode lithium-supplementing additive and a preparation method thereof. The composite cathode lithium-supplementing additive comprises a $Li_2NiO_2$ cathode lithium-supplementing material as a core and a functional encapsulation layer covering the core. A carbon layer in the functional encapsulation layer is an intermediate layer and an N,N'-diphenyl-p-phenylenediamine oxygen-consuming agent is an outer layer.

Preparation method of the composite cathode lithium-supplementing additive of this example was performed by the following steps:

S1. Preparation of cathode lithium-supplementing material: a certain amount of lithium oxide and nickel oxide were collected according to a ratio of Li:Ni=2.2:1, and fully mixed, and a resulting mixture was sintered at a temperature of 700°C for 8 hrs in an argon atmosphere to obtain a $Li_2NiO_2$ material;

S2. Preparation of functional encapsulation layer: the $Li_2NiO_2$ lithium-supplementing material prepared in S1 was added with citric acid having a corresponding content accounting for 5 wt.% of the $Li_2NiO_2$ lithium-supplementing material, and balled milled to achieve full mixing, then sintered at a temperature of 520°C for 4 hrs in an argon atmosphere. A resulting product was added with 3 wt.% of a N,N'-diphenyl-p-phenylenediamine oxygen-consuming agent, evenly mixed, and sintered at a temperature of 200°C for 3 hrs in an argon atmosphere to form a functional encapsulation layer on the surface of the lithium-supplementing material.

It was measured that the D50 of the composite cathode lithium-supplementing additive was 0.71 $\mu$m, the BET specific surface area was 0.41m$^2$/g, the active oxygen content was 1.63%, and the thickness of the functional encapsulation layer was about 10 nm.

**Comparative Example A1**

Provided is a core-shell structured $Li_5FeO_4$ cathode lithium-supplementing additive, which is different from Examples A1-A3 in that the functional encapsulation layer does not contain an oxygen-consuming agent.

**Comparative Example A2**

Provided is a core-shell structured $Li_6MnO_4$ cathode lithium-supplementing additive, which is different from Example A4 in that the functional encapsulation layer does not contain an oxygen-consuming agent.

**Comparative Example A3**

Provided is a core-shell structured $Li_2NiO_2$ cathode lithium-supplementing additive, which is different from Example A5 in that the functional encapsulation layer does not contain an oxygen-consuming agent.

**2. Lithium-ion battery example:**

Example A1 to Example A6 and Comparative Example A1 to Comparative Example A3 respectively provide lithium-ion batteries. Each lithium-ion battery was assembled into a lithium-ion battery according to the following method:

1) Cathode plate: the cathode lithium-supplementing additives provided in Example A1 to Example A6 and Comparative Example A1 to Comparative Example A3 were adopted as the cathode lithium-supplementing additive of the lithium-ion batteries of Example B1 to Example B6 and Comparative Example B1 to Comparative Example B3, respectively. Under the same conditions, NMP: $LiFePO_4$: cathode lithium-supplementing additive: Super P: PVDF were mixed according to a mass ratio of 100:93:2:2:3, and the mixing method was ball milling, and the ball milling time was 60 min; a rotation speed was controlled to 30 Hz; after homogenization-coating-drying-cutting operations, the cathode plate was prepared, and the cathode plate was baked in a vacuum oven at 100°C to remove trace water.

2) Anode plate: the anode active material graphite, conductive agent Super P, thickener carboxymethyl cellulose (CMC), and binder styrene butadiene rubber (SBR) were mixed evenly in deionized water to form an anode slurry. A mass ratio of graphite: Super P: CMC: SBR was 95:2:0.5:2.5. The anode slurry was coated on the current collector copper foil, which was subsequently performed with drying-rolling-secondary drying process, to obtain the anode plate.

3) Separator: a polyethylene (PE) separator was utilized.

4) Electrolyte: an electrolyte was a 1 mol/L $LiPF_6$ solution, and a solvent was composed of ethylene carbonate (EC) and diethyl carbonate (DEC) in a volume ratio of 1:1.

5) Assembly of secondary battery:

the above cathode plate, anode plate, electrolyte, and separator were assembled into a lithium-ion soft pack battery according to the lithium-ion battery assembly requirements.

**3. Related performance test of lithium-ion battery:**

the lithium-ion battery of each example and comparative example assembled in Section 5) was subjected to the following performance tests:

normal temperature cycle test: the battery was placed at 25°C and charged and discharged using a 1 C current in the charge and discharge voltage range of 3.0 V to 4.4 V. An initial thickness was recorded as $T_0$ and an initial capacity was recorded as $Q_0$. A thickness after 300 cycles was recorded as $T_1$ and a capacity after 300 cycles was recorded as $Q_1$. The thickness change rate and capacity retention rate of the battery after 300 cycles at room temperature were calculated by the following formula:

$$\text{thickness change rate (\%) after 300 cycles at normal temperature} = (T_1-T_0)/T_0 \times 100\%;$$

$$\text{capacity retention rate (\%) after 300 cycles at normal temperature} = Q_1/Q_0 \times 100\%.$$

$= Q_1/Q_0 \times 100\%.$

High temperature cycle test: at a high temperature of 45°C, charge and discharge cycles were performed using a 1C current in the charge and discharge voltage range of 3.0 V to 4.4V. An initial thickness was recorded as $T_2$ and an initial capacity was recorded as $Q_2$. A thickness after 300 cycles was recorded as $T_3$ and a capacity was recorded as $Q_3$. The thickness change rate and capacity retention rate of the battery after 300 cycles at high temperature (45°C) were calculated by the following formula:

$$\text{thickness change rate (\%) after 300 cycles at high temperature (45°C)} = (T_3-T_2)/T_2 \times 100\%;$$

$$\text{capacity retention rate (\%) after 300 cycles at high temperature (45°C)} = Q_3/Q_2 \times 100\%.$$

.

The relevant performance test results are shown in Table 1 below:

Table 1 Performance test results

| Group \ Item | Thickness change rate after 300 cycles at room temperature (%) | Capacity retention rate after 300 cycles at room temperature (%) | Thickness change rate after 300 cycles at high temperature (45°C) (%) | Capacity retention rate after 300 cycles at high temperature (45°C) (%) |
|---|---|---|---|---|
| Example B1 | 4.43 | 93.38 | 7.87 | 88.29 |
| Example B2 | 4.48 | 93.30 | 8.01 | 87.37 |
| Example B3 | 4.45 | 93.33 | 7.89 | 88.15 |
| Example B4 | 4.69 | 93.84 | 8.10 | 89.25 |
| Example B5 | 4.26 | 91.53 | 7.46 | 87.21 |
| Example B6 | 6.02 | 88.13 | 11.47 | 82.67 |
| Comparative Example B1 | 10.47 | 83.43 | 19.35 | 73.25 |
| Comparative Example B2 | 10.66 | 84.35 | 19.83 | 74.61 |
| Comparative Example B3 | 10.21 | 81.70 | 19.23 | 71.57 |

It can be seen from the test results in Table 1 that compared with the comparative examples, the thickness change rate of the lithium-ion batteries of Examples B1-B6 after 300 cycles at room temperature/high temperature (45°C) is significantly lower than that of Comparative Examples B1 to B3, and the capacity retention rate (%) after 300 cycles at room temperature/high temperature (45°C) is significantly higher than that of Comparative Examples B1 to B3. This shows that the battery comprising the composite cathode lithium-supplementing additive in the embodiments of the present application can inhibit gas production during the charging and discharging process, and effectively improve the safety performance of the battery and the cycle performance of the battery. It also shows that the different types of oxygen-consuming agents added in Examples B1 to B6, especially B1, B2, and B3, do not affect the performance of the lithium-supplementing agent and have the characteristics of good compatibility. In addition, by comparing Comparative Examples B1, B2, and B3 with Examples B1 to B6, especially B1, B4, and B5, it is found that when the oxygen-consuming agent is applied to other lithium-supplementing additives, it does not affect the performance of the lithium-supplementing agent.

Further comparison of the thickness change rate after 300 cycles at room temperature/high temperature (45°C) among the lithium-ion batteries of Example B1 to Example B5 and Example B6 shows that the thickness change rate of the lithium-ion battery of Example B1 to Example B5 and Example B6 is also significantly less than that of the lithium-ion battery of Example B6, reaching a significant difference, and the capacity retention rate (%) after 300 cycles at room temperature/high temperature (45°C) of Example B1 to Example B5 is significantly higher than that of Example B6, also reaching a significant difference.

This illustrates that the composite lithium-supplementing additive of the embodiments of the present application has the characteristics of universal applicability. In summary, the use of the composite cathode material of the present application can inhibit the gas generation phenomenon of lithium-ion battery during the charging and discharging process, make the lithium-ion battery have high capacity retention rate and high safety performance.

The above description is only preferred embodiments of the present application and is not intended to limit the present application. For those skilled in the art, the present application can have various modifications and changes. Any modifications, equivalent substitutions, and improvements made within the spirit and principles of the present application should fall within the protection scope of the present application.

**Claims**

1.  A composite cathode lithium-supplementing additive, comprising: a core, and a functional encapsulation layer covering the core, **characterized in that** the core comprises a cathode lithium-supplementing material, and the functional encapsulation layer contains an oxygen-consuming agent.

2.  The composite cathode lithium-supplementing additive according to claim 1, wherein the functional encapsulation layer is a first oxygen-consuming coating layer formed by the oxygen-consuming agent, and the first oxygen-consuming coating layer covers the core; or alternatively,

    the functional encapsulation layer comprises a dense functional encapsulation layer, the dense functional encapsulation layer covers the core, and the oxygen-consuming agent is doped in the dense functional encapsulation layer; or alternatively,
    the functional encapsulation layer comprises a dense functional encapsulation layer, the dense functional encapsulation layer covers the core, the oxygen-consuming agent forms a second oxygen-consuming coating layer, and the second oxygen-consuming coating layer covers the dense functional encapsulation layer.

3.  The composite cathode lithium-supplementing additive according to any one of claim 2, wherein the dense functional encapsulation layer comprises an ionic conductivity encapsulation layer and/or an electronic conductivity encapsulation layer, and the ionic conductivity encapsulation layer or the electronic conductivity encapsulation layer covers the core; and/or

    a thickness of the dense functional encapsulation layer is 2 nm to 100 nm; and/or
    a thickness of any one of the first oxygen-consuming coating layer and the second oxygen-consuming coating layer is 2 nm to 100 nm.

4.  The composite cathode lithium-supplementing additive according to claim 3, wherein a material of the electronic conductivity encapsulation layer comprises at least one of a carbon material, a conductive oxide, and a conductive organic matter; and/or
    a material of the ionic conductivity encapsulation layer may comprise at least one of a perovskite type, a NASICON type, and a garnet type.

5.  The composite cathode lithium-supplementing additive according to claim 3 or 4, wherein the functional encapsulation layer comprises the electronic conductivity encapsulation layer, the electronic conductivity encapsulation layer covers the core, and the oxygen-consuming agent forms the second oxygen-consuming coating layer and covers the electronic conductivity encapsulation layer; wherein the electronic conductivity encapsulation layer is a carbon layer.

6.  The composite cathode lithium-supplementing additive according to any one of claims 1-5, wherein a content of an active oxygen accounts for not higher than 5% of the composite cathode lithium-supplementing additive; and/or

    a mass content of the oxygen-consuming agent in the composite cathode lithium-supplementing additive is 0.1 wt.% to 10 wt.%; and/or
    the oxygen-consuming agent comprises at least one of a polyphenol oxygen-consuming agent, a hindered phenol oxygen-consuming agent, a hindered amine oxygen-consuming agent, an L-ascorbic acid, a melatonin, and zinc dialkyl dithiophosphate.

7.  The composite cathode lithium-supplementing additive according to claim 6, wherein the polyphenol oxygen-consuming agent comprises at least one of tert-butyl hydroquinone and tea polyphenol;

    the hindered phenol comprises at least one of 2,6-di-tert-butyl-p-cresol, antioxidant 1076, antioxidant 1010, and tris(3,5-di-tert-butyl-4-hydroxybenzyl) isocyanurate; and
    the hindered amine comprises N,N'-diphenyl-p-phenylenediamine.

8.  The composite cathode lithium-supplementing additive according to any one of claims 1-7, wherein the cathode lithium-supplementing material comprises an inverse fluorite structured lithium-supplementing material; and/or
    the cathode lithium-supplementing material comprises a material with a molecular formula of $L_xM_yN_zO_q$, wherein L represents Li or a mixed alkali metal element composed of Li and not exceeding 30% of at least one of K and Na; M comprises at least one of Fe, Co, Mn, Al, Ni, and Si; N comprises at least one of Fe, Co, Mn, Al, Ni, Si, or other equivalent or heterovalent metal elements, and O represents an oxygen element; x is 2 to 6, y is 0.7 to 1.0, z is 0 to 0.3, and q is 2 to 5.

9. The composite cathode lithium-supplementing additive according to claim 8, wherein a molar ratio of L to a sum of M and N in the molecular formula $L_xM_yN_zO_q$ is (4 to 7):1.

10. The composite cathode lithium-supplementing additive according to any one of claims 1-9, wherein the core is at least one of a primary particle and a secondary particle; and/or
a particle size of the core is 0.2 $\mu$m to 20 $\mu$m.

11. A preparation method of a composite cathode lithium-supplementing additive, comprising the following steps:
forming a functional encapsulation layer on a surface of a particle containing a cathode lithium-supplementing material, to enable the functional encapsulation layer to cover the particle containing the cathode lithium-supplementing material, wherein the functional encapsulation layer contains an oxygen-consuming agent.

12. The preparation method according to claim 11, wherein the method of forming the functional encapsulation layer on the surface of the particle containing the cathode lithium-supplementing material comprises the following steps:

subjecting the oxygen-consuming agent and the particle containing the cathode lithium-supplementing material with a first mixing treatment, to enable the oxygen-consuming agent to form a third oxygen-consuming coating layer on the surface of the particle containing the cathode lithium-supplementing material;
or alternatively,
subjecting the oxygen-consuming agent and a material for forming a dense functional encapsulation layer with a second mixing treatment to form a mixture, and subjecting the mixture and the particle containing the cathode lithium-supplementing material with a third mixing treatment, to enable the mixture to form the functional encapsulation layer on the surface of the particle containing the cathode lithium-supplementing material;
or alternatively,
forming a dense functional encapsulation layer on the surface of the particle containing the cathode lithium-supplementing material by the material for forming a dense functional encapsulation layer, and subjecting a resulting product and the oxygen-consuming agent with a fourth mixing treatment to form a fourth oxygen-consuming coating layer on a surface of the dense functional encapsulation layer.

13. A cathode lithium-supplementing additive, **characterized by** comprising the composite cathode lithium-supplementing additive according to any one of claims 1-10 or the composite cathode lithium-supplementing additive prepared by the preparation method according to any one of claims 11-12, and further comprising other lithium-supplementing additives and/or auxiliary agents.

14. A cathode, **characterized by** comprising: a current collector, and a cathode active layer bonded to a surface of the current collector; the cathode active layer comprising: a cathode active material, a lithium-supplementing additive, a binder, and a conductive agent; wherein the lithium-supplementing additive is a composite cathode lithium-supplementing additive according to any one of claims 1-10, the composite cathode lithium-supplementing additive prepared by the preparation method according to any one of claims 11-12, or the cathode lithium-supplementing additive according to claim 13.

15. The cathode according to claim 14, wherein the composite cathode lithium-supplementing additive accounts for 0.5 wt.% to 10 wt.% of the cathode active material.

16. A secondary battery, comprising a cathode, **characterized in that** the cathode is the cathode according to any one of claims 14-15.

FIG. 1

FIG. 2

FIG. 3

FIG. 4

## INTERNATIONAL SEARCH REPORT

| International application No. |
| --- |
| **PCT/CN2023/097816** |

**A. CLASSIFICATION OF SUBJECT MATTER**

H01M10/42(2006.01)i; H01M4/13(2010.01)i; H01M10/0525(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; ENTXT; ENTXTC; DWPI; CNKI: 锂, 电池, 正极, 补 3d 锂, 抗氧剂, 耗氧剂, 抗坏血酸, 对苯二酚, 茶多酚, 活性氧, lithium, battery, positive, supplement+, antioxid+, oxygen, consumption, agent, ascorbic, hydroquinone, tea w polyphenols, active w oxygen

**C. DOCUMENTS CONSIDERED TO BE RELEVANT**

| Category* | Citation of document, with indication, where appropriate, of the relevant passages | Relevant to claim No. |
| --- | --- | --- |
| PX | CN 115347253 A (SHENZHEN DEFANGCHUANGYU NEW ENERGY TECHNOLOGY CO., LTD.) 15 November 2022 (2022-11-15)<br>    description, paragraphs 54-102, and figures 1-4 | 1-16 |
| Y | CN 113793983 A (EVERGRANDE NEW ENERGY TECHNOLOGY (SHENZHEN) CO., LTD.) 14 December 2021 (2021-12-14)<br>    description, paragraphs 49-89, and figures 1-3 | 1-16 |
| Y | CN 114142008 A (SVOLT ENERGY TECHNOLOGY CO., LTD.) 04 March 2022 (2022-03-04)<br>    description, paragraphs 3-45 | 1-16 |
| Y | CN 113036106 A (KUNSHAN BAOTRON NEW ENERGY TECHNOLOGY CO., LTD.) 25 June 2021 (2021-06-25)<br>    description, paragraphs 7-42 | 2-5, 12 |
| Y | CN 113782700 A (ZHUHAI COSMX BATTERY CO., LTD.) 10 December 2021 (2021-12-10)<br>    description, paragraphs 32-102 | 6-7 |

☑ Further documents are listed in the continuation of Box C.　　☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **08 August 2023** | **16 August 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2023/097816** |

**C.** **DOCUMENTS CONSIDERED TO BE RELEVANT**

| Category* | Citation of document, with indication, where appropriate, of the relevant passages | Relevant to claim No. |
|---|---|---|
| Y | CN 107925087 A (OSAKA SODA CO., LTD.) 17 April 2018 (2018-04-17) description, paragraphs 10-86 | 6-7 |
| A | CN 110729451 A (HUIZHOU BYD BATTERY CO., LTD.) 24 January 2020 (2020-01-24) entire document | 1-16 |
| A | CN 113193173 A (ZHUHAI COSMX BATTERY CO., LTD.) 30 July 2021 (2021-07-30) entire document | 1-16 |
| A | US 2017077553 A1 (SANYO ELECTRIC CO., LTD.) 16 March 2017 (2017-03-16) entire document | 1-16 |

Form PCT/ISA/210 (second sheet) (July 2022)

**INTERNATIONAL SEARCH REPORT**
Information on patent family members

International application No.

**PCT/CN2023/097816**

| Patent document cited in search report | | | Publication date (day/month/year) | Patent family member(s) | | | Publication date (day/month/year) |
|---|---|---|---|---|---|---|---|
| CN | 115347253 | A | 15 November 2022 | None | | | |
| CN | 113793983 | A | 14 December 2021 | None | | | |
| CN | 114142008 | A | 04 March 2022 | None | | | |
| CN | 113036106 | A | 25 June 2021 | None | | | |
| CN | 113782700 | A | 10 December 2021 | None | | | |
| CN | 107925087 | A | 17 April 2018 | KR | 20180051497 | A | 16 May 2018 |
| | | | | TW | 201724626 | A | 01 July 2017 |
| | | | | US | 2018254475 | A1 | 06 September 2018 |
| | | | | JPWO | 2017047639 | A1 | 19 July 2018 |
| | | | | JP | 6828685 | B2 | 10 February 2021 |
| | | | | EP | 3352265 | A1 | 25 July 2018 |
| | | | | EP | 3352265 | A4 | 03 April 2019 |
| | | | | WO | 2017047639 | A1 | 23 March 2017 |
| CN | 110729451 | A | 24 January 2020 | None | | | |
| CN | 113193173 | A | 30 July 2021 | None | | | |
| US | 2017077553 | A1 | 16 March 2017 | JPWO | 2015136922 | A1 | 06 April 2017 |
| | | | | WO | 2015136922 | A1 | 17 September 2015 |

Form PCT/ISA/210 (patent family annex) (July 2022)

21

**EP 4 517 920 A1**

**Patent documents cited in the description**

- CN 202210633013